# EUROPEAN PATENT APPLICATION

(11) **EP 4 645 776 A1**
(43) Date of publication of application: **05.11.2025**
(21) Application number: 22969803.0
(22) Date of filing: 30.12.2022
(51) Int. Cl.: H04L 27/00

(54) **PERFORMANCE DETERMINATION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN)
(74) Representative: Mewburn Ellis LLP
(86) International application number: PCT/CN2022/144065
(87) International publication number: WO 2024/138661

(57) **Abstract**

The present disclosure discloses a method and apparatus for performance determination, a device, and a storage medium, and relates to the field of communications. The method includes determining a performance of a second artificial intelligence (Al) scheme based on a first AI scheme, where the second AI scheme is used to perform a first communication task. The performance of the second AI scheme is determined based on the first AI scheme without relying on execution results of the second AI scheme, thereby improving the flexibility of performance determination for AI-based communication schemes.

## Description

### TECHNICAL FIELD

The present disclosure relates to the field of communications, and particularly to a method and apparatus for performance determination, a device, and a storage medium.

### BACKGROUND

In the related art, performance evaluation of a target communication scheme typically relies on execution results of the target communication scheme. In other words, results of performance evaluation can only be obtained after the target communication scheme has been executed. Such a method for performance evaluation has certain limitations.

### SUMMARY

Embodiments of the present disclosure provide a method and apparatus for performance determination, a device, and a storage medium. The technical solution is as follows.

In an aspect of the present disclosure, a method for performance determination is provided. The method is executed by a terminal device. The method includes the following. A performance of a second artificial intelligence (Al) scheme is determined based on a first AI scheme, where the second AI scheme is used to perform a first communication task.

In an aspect of the present disclosure, a method for performance determination is provided. The method is executed by a network device. The method includes the following. A performance of a second AI scheme is determined based on a first AI scheme, where the second AI scheme is used to perform a first communication task.

In an aspect of the present disclosure, an apparatus for performance determination is provided. The apparatus includes a first determining module configured to determine a performance of a second AI scheme based on a first AI scheme, where the second AI scheme is used to perform a first communication task.

In an aspect of the present disclosure, an apparatus for performance determination is provided. The apparatus includes a second determining module configured to determine a performance of a second AI scheme based on a first AI scheme, where the second AI scheme is used to perform a first communication task.

In an aspect of the present disclosure, a communication device is provided. The terminal includes a processor, a transceiver coupled to the processor, and a memory configured to store executable instructions of the processor. The processor is configured to load and execute the executable instructions, such that the communication device implements the method for performance determination in the above aspect.

In an aspect of the present disclosure, a computer-readable storage medium is provided. The computer-readable storage medium is configured to store executable instructions, and when the executable instructions are loaded and executed by a processor, the computer-readable storage medium is used to implement the method for performance determination in the above aspect.

In an aspect of the present disclosure, a computer program product is provided. The computer program product includes computer instructions stored in a computer-readable storage medium, where when a processor of a communication device reads the computer instructions from the computer-readable storage medium and executes the computer instructions, the communication device is enabled to perform the method for performance determination in the above aspect.

In an aspect of the present disclosure, a chip is provided. The chip includes a programmable logic circuit and/or program instructions, where when the chip runs, the method for performance determination in the above aspect is implemented.

In an aspect of the present disclosure, a computer program is provided. The computer program includes computer instructions, where when a processor of a communication device executes the computer instructions, the communication device is enabled to perform the method for performance determination in the above aspect.

The technical solution provided in the embodiments of the present disclosure provides at least the following technical effects. The performance of the second AI scheme is determined based on the first AI scheme without relying on execution results of the second AI scheme, thereby improving the flexibility of performance determination for AI-based communication schemes.

### BRIEF DESCRIPTION OF THE DRAWINGS

To more clearly describe the technical solutions in the embodiments of the present disclosure, the accompanying drawings referenced in the illustration of the embodiments are briefly introduced below. It may be apparent that, the following described accompanying drawings merely represent some embodiments of the present disclosure. Those of ordinary skill in the art may derive other accompanying drawings based on these accompanying drawings without creative efforts.
FIG. 1 is a schematic diagram of a communication scheme in the related art.
FIG. 2 is a schematic diagram of a communication scheme in the related art.
FIG. 3 is a schematic diagram of a communication scheme in the related art.
FIG. 4 is a schematic diagram of a communication scheme in the related art.
FIG. 5 is a schematic diagram of a communication system provided in some exemplary embodiments of the present disclosure.
FIG. 6 is a schematic flow chart of a method for performance determination provided in some exemplary embodiments of the present disclosure.
FIG. 7 is a schematic flow chart of a method for performance determination provided in some exemplary embodiments of the present disclosure.
FIG. 8 is a schematic flow chart of a method for performance determination provided in some exemplary embodiments of the present disclosure.
FIG. 9 is a schematic flow chart of a method for performance determination provided in some exemplary embodiments of the present disclosure.
FIG. 10 is a schematic flow chart of a method for performance determination provided in some exemplary embodiments of the present disclosure.
FIG. 11 is a schematic flow chart of a method for performance determination provided in some exemplary embodiments of the present disclosure.
FIG. 12 is a schematic flow chart of a method for performance determination provided in some exemplary embodiments of the present disclosure.
FIG. 13 is a structural block diagram of an apparatus for performance determination provided in some exemplary embodiments of the present disclosure.
FIG. 14 is a structural block diagram of an apparatus for performance determination provided in some exemplary embodiments of the present disclosure.
FIG. 15 is a schematic structural diagram of a communication device provided in some exemplary embodiments of the present disclosure.

### DETAILED DESCRIPTION

To make the objectives, technical solutions, and advantages of the present disclosure more clearly understood, embodiments of the present disclosure will be described in further detail below with reference to the accompanying drawings. The exemplary embodiments will be described in detail, and the examples are illustrated in the accompanying drawings. When reference is made to the accompanying drawings in the following illustration, unless otherwise indicated, like reference numerals in different accompanying drawings represent the same or similar elements. The embodiments described in the following exemplary embodiments do not represent all embodiments consistent with the present disclosure. Rather, they are merely examples of apparatuses and methods consistent with certain aspects of the present disclosure as described in the appended claims.

The terms used in the present disclosure is for the purpose of describing particular embodiments only and is not intended to limit the present disclosure. As used in the present disclosure and the appended claims, the singular forms "a," "an," and "the" are intended to include the plural forms as well, unless the context clearly indicates otherwise. It may also be understood that, the term "and/or" as used herein refers to and includes any and all possible combinations of one or more of the associated listed items.

It may be understood that, although the terms "first", "second", "third", and the like may be used herein to describe various information, various information should not be limited by such terms. These terms are only used to distinguish one type of information from another of the same type. For example, without departing from the scope of the present disclosure, first information may also be referred to as second information, and similarly, second information may be referred to as first information. Depending on the context, the word "if" as used herein may be interpreted to mean "when," "upon," "in the case where", or "in response to."

First, an introduction to the relevant technologies involved in the embodiments of the present disclosure will be provided below.

### Artificial intelligence (AI)

AI refers to the theory, methods, techniques, and application systems that utilize digital computers or machines controlled by digital computers to simulate, extend, and augment human intelligence, perceive environments, acquire knowledge, and use that knowledge to achieve optimal results. In other words, AI is an interdisciplinary technology within computer science that aims to understand the nature of intelligence and to produce intelligent machines that respond in a manner similar to human intelligence. AI focuses on designing and implementing intelligent machines with capabilities such as perception, reasoning, and decision-making.

AI is a multidisciplinary field that covers both hardware and software technologies. Fundamental AI technologies typically include sensors, dedicated AI chips, cloud computing, distributed storage, big data processing, operating/interaction systems, mechatronics, etc. The main areas of AI software technology include computer vision, speech processing, natural language processing, and machine learning (ML)/deep learning.

### AI-based wireless communication scheme

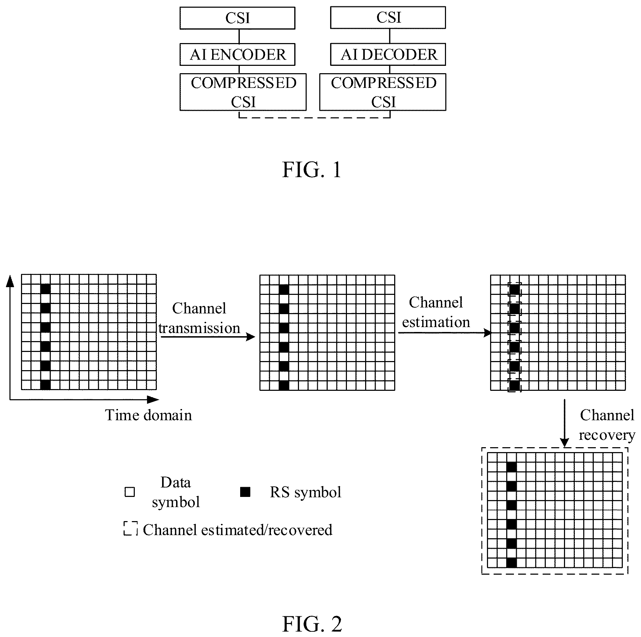

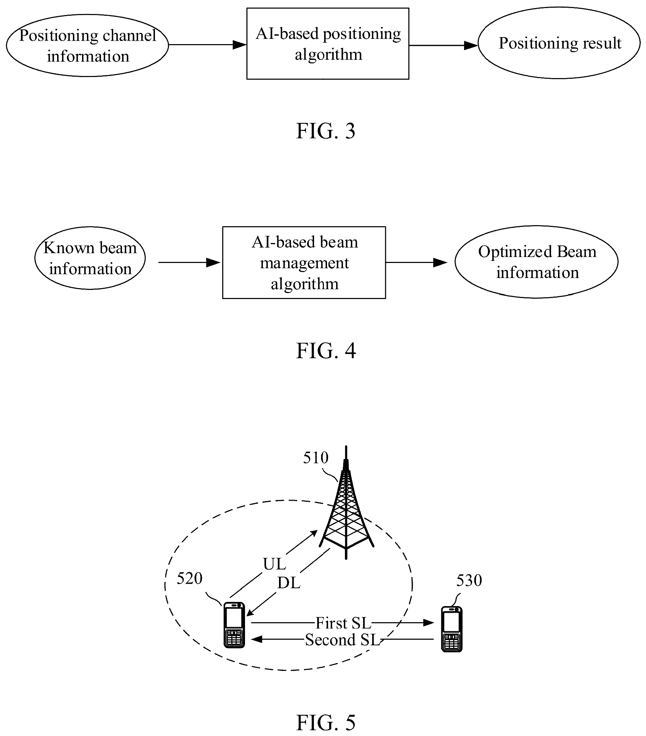

Currently, AI-based schemes are being increasingly applied in wireless communication systems. For example, channel state information (CSI) feedback can be achieved through AI. As illustrated in FIG. 1, an AI encoder and an AI decoder are introduced to achieve AI-based CSI compression and feedback. Channel estimation can be achieved through AI. As illustrated in FIG. 2, an AI channel estimator is used to achieve high-performance estimation of a given channel, thereby providing required CSI for subsequent coherent demodulation. Positioning can be achieved through AI. As illustrated in FIG. 3, based on an AI-based positioning algorithm and relying on positioning channel information, high-precision positioning results can be obtained, where positioning channel information refers to channel information for positioning. Beam management can be achieved through AI. As illustrated in FIG. 4, based on an AI-based beam management algorithm and known beam information, optimized or more refined beam information can be obtained or beam information for future can be predicted.

### Performance evaluation of AI/ML-based scheme

In related technologies, performance evaluation of AI/ML-based schemes is primarily achieved based on inference performance of AI/ML schemes on a test dataset. For example, for a CSI compression and recovery scheme, CSI recovery accuracy that can be obtained through a specific AI/ML scheme under a specific compression feedback bit condition can be regarded as a performance evaluation metric of the scheme, for example, a difference between ideal CSI information and CSI information recovered after compression or a difference between CSI information to be compressed and the CSI information recovered after compression may serve as CSI recovery accuracy. Similar to the CSI compression and recovery scheme, for a CSI prediction scheme, CSI prediction accuracy obtained can be regarded as a performance evaluation metric of the scheme, for example, a difference between ideal CSI information and CSI information obtained through prediction or a difference between target CSI information and the CSI information obtained through prediction may serve as CSI prediction accuracy.

However, such methods for performance evaluation heavily depend on test datasets, label data, target results, and system execution efficiency. For example, in the case of a CSI compression and recovery scheme, performance evaluation may be conducted by regarding a difference between CSI recovery accuracy obtained under a specific compression feedback bit condition (obtained based on the difference between a CSI recovery result and an ideal CSI recovery result on a test dataset) and a target recovery accuracy (the target recovery accuracy refers to CSI recovery accuracy of a comparison scheme, and if the CSI recovery accuracy is lower than the target recovery accuracy, the AI-based CSI recovery scheme does not need to be adopted) as a performance evaluation metric for the scheme. In this way, performance evaluation requires not only knowledge of CSI recovery results of the currently operating scheme, but also a test dataset for performance evaluation, or ideal and target CSI recovery reference results, as well as ideal and target CSI recovery accuracy. Moreover, it may be noted that, these ideal and target CSI recovery reference results and accuracy may vary across samples and scenarios. Thus, the evaluation method that relies on ideal and target CSI recovery reference results and CSI recovery accuracy may lead to significant computational overhead, resource consumption, and transmission overhead.

Additionally, in the related art, performance evaluations of AI-based wireless communication schemes are often post hoc. That is, many performance evaluations of AI-based wireless communication schemes rely on the difference between the computed/inferred result and the ideal/target result. In other words, performance evaluation must be conducted after the AI-based wireless communication scheme has been in operation for a period of time, by assessing execution results of the AI-based wireless communication scheme to determine whether the performance of the AI-based wireless communication scheme is suboptimal. It is not possible to complete a prior performance evaluation before using the AI-based wireless communication scheme.

In view of the above problems, the present disclosure provides a method for performance determination, which supports performance evaluation of AI-based communication schemes.

FIG. 5 is a schematic diagram of a communication system provided in some exemplary embodiments of the present disclosure. The communication system includes communication devices such as a network device 510 and a terminal device 520, or a terminal device 520 and a terminal device 530, which are not limited by the present disclosure.

The network device 510 in the present disclosure is a device with wireless transmission and reception capabilities. The network device 510 includes but is not limited to: an evolved Node B (eNB), a radio network controller (RNC), a Node B (NB), a base station controller (BSC), a base transceiver station (BTS), a home base station (e.g., a home evolved Node B or home Node B (HNB)), a baseband unit (BBU), or an access point (AP), a wireless relay node, a wireless backhaul node, a transmission point (TP), or a transmission and reception Point (TRP), etc, in a wireless fidelity (Wi-Fi) system, or a next generation Node B (gNB) or a transmission point (TRP or TP) in a fifth generation (5G) mobile communication system, or one or more antenna panels (including multiple antenna panels) of a base station in the 5G system, or a network node constituting the gNB or TP, such as a BBU or a distributed unit (DU), or a base station in a beyond fifth generation (B5G) or sixth generation (6G) mobile communication system, or a core network (CN), fronthaul, backhaul, a radio access network (RAN), network slicing, etc. The network device may include one or more of a centralized unit (CU) node, a DU node, or an active antenna unit (AAU) node. Furthermore, the CU may be categorized as a network device in the RAN or in the CN, which is not limited by the present disclosure.

The terminal device 520 and the terminal device 530 in the present disclosure are devices with wireless transmission and reception capabilities, also referred to as user equipment (UE), access terminals, user units, user stations, mobile stations, mobile terminals, remote stations, remote terminals, mobile devices, user terminals, terminals, wireless communication devices, user agents, or user apparatuses. The terminal may include but is not limited to: a handheld device, a wearable device, an in-vehicle device, and an internet of things (IoT) device, such as a mobile phone, a tablet computer, an e-book reader, a laptop, a desktop computer, a television, a game console, a mobile internet device (MID), an augmented reality (AR) terminal, a virtual reality (VR) terminal, a mixed reality (MR) terminal, a wearable device, a handle, an electronic tag, a controller, a wireless terminal in industrial control, a wireless terminal in self driving, a wireless terminal in remote medical, a wireless terminal in smart grid, a wireless terminals in transportation safety, a wireless terminal in smart city, a wireless terminal in smart home, a wireless terminal in remote medical surgery, a cellular phone, a cordless phones, a session initiation protocol (SIP) phone, a wireless local loop (WLL) station, a personal digital assistant (PDA), a set top box (STB), a customer premise equipment (CPE), etc..

The network device 510 and the terminal device 520 may communicate with each other via an air interface technology, such as a Uu interface.

In an example, there may be two communication scenarios between the network device 510 and the terminal device 520: an uplink communication scenario and a downlink communication scenario. Uplink communication refers to signal transmission to the network device 510, while downlink communication refers to signal transmission to the terminal device 520.

The terminal device 520 and the terminal device 530 may communicate with each other via an air interface technology, such as a Uu interface.

In some embodiments, there may be two communication scenarios between the terminal device 520 and the terminal device 530: a first sidelink communication scenario and a second sidelink communication scenario. The first sidelink communication refers to signal transmission to the terminal device 530, and the second sidelink communication refers to signal transmission to the terminal device 520.

The terminal device 520 and the terminal device 530 may both be within network coverage and located in the same cell, or both within network coverage but located in different cells, or the terminal device 520 may be within network coverage while the terminal device 530 is outside network coverage.

In some embodiments, the network device 510 is an AP or a station (STA). In some scenarios, the AP may also be referred to as an AP STA, meaning that the AP is also a type of STA in a certain sense. In some scenarios, the STA may also be referred to as a non-AP STA.

In some embodiments, the network device 510 is an AP or an STA.

An AP functions as a bridge connecting wired and wireless networks. The primary role of an AP is to connect various wireless network clients and then access the Ethernet via the wireless network. The AP device may be a terminal device with a Wi-Fi chip or network device with a Wi-Fi chip.

It may be understood that, the role of an STA in a communication system is not absolute. For example, in some scenarios, when a mobile phone connects to a router, the phone serves as a non-AP STA; when the phone serves as a hotspot for other phones, the phone serves as an AP.

In some embodiments, a non-AP STA may support the 802.11be standard. The non-AP STA may also support various current and future WLAN standards in the 802.11 family, such as 802.11ax, 802.11ac, 802.11n, 802.11g, 802.11b, and 802.11a. The non-AP STA may further be applied in network environments supporting next-generation WLAN systems, which evolve from the 802.11ax system and are backward compatible with the 802.11ax system. The next-generation Wi-Fi communication refers to any future generation of Wi-Fi communication after Wi-Fi 7 based on the IEEE 802.11be specification, such as ultra high reliability (UHR) communication. For example, the non-AP STA may be a UHR STA.

In some embodiments, an AP may be a device supporting the 802.11be standard. The AP may also support various current and future WLAN standards in the 802.11 family, such as 802.11ax, 802.11ac, 802.11n, 802.11g, 802.11b, and 802.11a. The AP may also be applied in network environments supporting next-generation WLAN systems, which evolve from the 802.11ax system and are backward compatible with the 802.11ax system. The next-generation Wi-Fi communication refers to any future generation of Wi-Fi communication after Wi-Fi 7 based on the IEEE 802.11be specification, such as UHR communication.

The technical solutions provided in embodiments of the present disclosure may be applied to various communication systems, such as: a global system of mobile communication (GSM), an orthogonal frequency division multiplexing (OFDM) system, a code division multiple access (CDMA) system, a wideband CDMA (WCDMA) system, general packet radio service (GPRS), a long term evolution (LTE) system, an LTE frequency division duplex (FDD) system, an LTE time division duplex (TDD) system, an advanced LTE (LTE-A) system, a universal mobile telecommunication system (UMTS), a worldwide interoperability for microwave access (WiMAX) communication system, a 5G mobile communication system, a new radio (NR) system, an evolved NR system, an LTE-based access to unlicensed spectrum (LTE-U) system, an NR-based access to unlicensed spectrum (NR-U) system, a terrestrial network (TN), a non-terrestrial network (NTN), a wireless local area network (WLAN), Wi-Fi, a cellular loT system, or a cellular passive IoT systems. It may also be applied to future evolved systems after the 5G NR system, as well as B5G, 6G, and future evolved systems. In some embodiments of the present disclosure, "NR" may also refer to the 5G NR system or the 5G system. The 5G mobile communication system may include non-standalone (NSA) and/or standalone (SA). In addition, the terminal devices 520 and 530 may also include smart printers, train detectors, gas station sensors, etc., whose primary functions include at least one of: collecting data, receiving control information and downlink data from the network device 510, and sending uplink data to the network device 510.

The terminal device 530 may communicate with the network device 510 directly or indirectly.

The technical solutions provided in embodiments of the present disclosure may also be applied to machine type communication (MTC), long term evolution-machine (LTE-M), a device to device (D2D) network, a machine to machine (M2M) network, an IoT network, or other networks. The IoT network may include, for example, an internet of vehicles (IoV) network. Communication modes in the IoV are generally referred to as vehicle to X (V2X, where X represents any entity), including but not limited to: vehicle to vehicle (V2V) communication, vehicle to infrastructure (V2I) communication, vehicle to pedestrian (V2P) communication, or vehicle to network (V2N) communication.

The network device 510, terminal device 520, and terminal device 530 may each be equipped with multiple antennas, including at least one transmission antenna for sending signals and at least one receiving antenna for receiving signals. Additionally, each communication device further includes transmitter and receiver chains, which may include multiple components related to signal transmission and reception (e.g., processors, modulators, multiplexers, demodulators, demultiplexers, or antennas), as would be understood by those skilled in the art. Therefore, communication between the network device 510 and the terminal device 520, and between the terminal devices 520 and 530, may be carried out using multi-antenna techniques.

The communication system provided by the present disclosure may be applied to at least one of the following communication scenarios: uplink communication scenario, downlink communication scenario, and sidelink communication scenario.

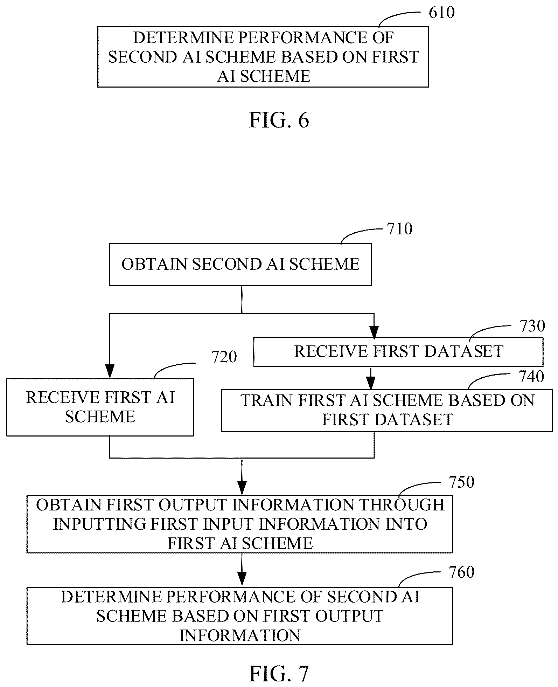

FIG. 6 is a schematic flow chart of a method for performance determination according to some exemplary embodiments of the present disclosure. The method is executed by the terminal device as illustrated in FIG. 5. The method includes at least part of the following steps.

Step 610: a performance of a second AI scheme is determined based on a first AI scheme.

The AI scheme refers to a communication-related AI/ML-based scheme, such as a communication-related AI model or a communication-related AI dataset.

"Communication-related" refers to addressing communication-related problems, improving communication-related performance, or executing communication-related tasks.

The second AI scheme is used to perform a first communication task. The first communication task refers to a communication-related task, such as at least one of CSI compression, CSI recovery, CSI prediction, beam selection, beam prediction, or positioning.

The performance refers to communication-related performance, such as whether the second AI scheme is used to perform the first communication task, and/or a difference between the second AI scheme and a comparison scheme, and/or a confidence level of the second AI scheme.

The case that the performance of the second AI scheme is determined based on the first AI scheme may be understood as that the first AI scheme is used to determine the performance of the second AI scheme, or as that the performance of the second AI scheme can be obtained after execution of the first AI scheme. Optionally, before the second AI scheme is used to perform the first communication task, the performance of the second AI scheme is determined based on the first AI scheme.

In summary, in the method provided by the present disclosure, the performance of the second AI scheme is determined based on the first AI scheme without relying on execution results of the second AI scheme, thereby improving the flexibility of performance determination for AI-based communication schemes.

FIG. 7 is a schematic flow chart of a method for performance determination according to some exemplary embodiments of the present disclosure. The method is executed by the terminal device as illustrated in FIG. 5. The method includes at least part of the following steps.

Step 710: a second AI scheme is obtained.

The second AI scheme is used to perform a first communication task. The first communication task refers to a communication-related task, such as at least one of CSI compression, CSI recovery, CSI prediction, beam selection, beam prediction, or positioning.

In some embodiments, step 710 may be implemented as "receiving the second AI scheme." The second AI scheme is trained by a network device. The network device sends the trained second AI scheme to the terminal device, and the terminal device receives the second AI scheme from the network device.

In the present disclosure, "training", "building", "constructing", and "generating" have the same meaning.

In some embodiments, step 710 may be implemented as "training the second AI scheme."

In some embodiments, the second AI scheme is trained by the terminal device. The terminal device receives a second dataset sent by the network device and trains the second AI scheme based on the second dataset.

In some embodiments, the second AI scheme is trained jointly by the network device and the terminal device. The second AI scheme includes a first federated sub-scheme and a second federated sub-scheme. The network device trains the first federated sub-scheme. The terminal device receives the second dataset sent by the network device and trains the second federated sub-scheme based on the second dataset.

Step 720: a first AI scheme is received.

In some embodiments, step 720 refers to that the terminal device receives the first AI scheme sent by the network device. The first AI scheme is trained by the network device, and the network device sends the trained first AI scheme to the terminal device.

The network device sends the first AI scheme via a radio resource control (RRC) message, a physical downlink shared channel (PDSCH), or a dedicated channel for sending AI/ML models.

The network device indicates the transmission of the first AI scheme via downlink control information (DCI), a medium access control (MAC) control element (CE), an RRC message, or a broadcast message.

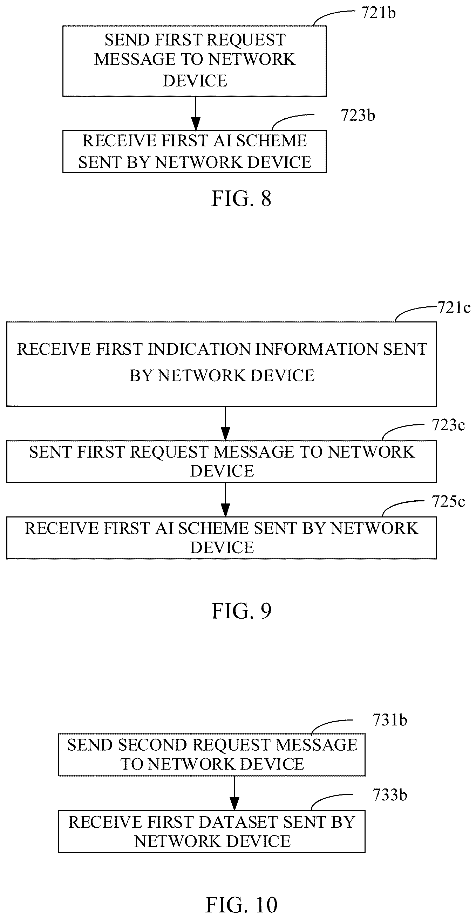

In some embodiments, step 720 may be implemented as steps 721b and 723b, as illustrated in FIG. 8.

Step 721b: a first request message is sent to the network device.

The terminal device sends the first request message to the network device via uplink control information (UCI) or an RRC message, where the first request information is used to request the network device to send the first AI scheme.

Step 723b: the first AI scheme sent by the network device is received.

The first AI scheme is trained by the network device, and the network device sends the constructed first AI scheme to the terminal device.

The network device sends the first AI scheme via an RRC message, a PDSCH, or a dedicated channel for sending AI/ML models.

The network device indicates the transmission of the first AI scheme via DCI, an MAC CE, an RRC message, or a broadcast message.

In some embodiments, step 720 may be implemented as steps 721c, 723c, and 725c, as illustrated in FIG. 9.

Step 721c: first indication information sent by the network device is received.

The network device sends the first indication information via at least one of DCI, an MAC CE, RRC signaling, an RRC reconfiguration message, system broadcast, a master information block (MIB), a system information block (SIB), or SIB1. The first indication information is used to indicate or notify that the first AI scheme is used to determine the performance of the second AI scheme.

Step 723c: a first request message is sent to the network device.

The terminal device sends the first request message to the network device via UCI or an RRC message, where the first request message is used to request the network device to send the first AI scheme.

Step 725c: the first AI scheme sent by the network device is received.

The first AI scheme is trained by the network device, and the network device sends the constructed first AI scheme to the terminal device.

The network device sends the first AI scheme via an RRC message, a PDSCH, or a dedicated channel for sending AI/ML models.

The network device indicates the transmission of the first AI scheme via DCI, an MAC CE, an RRC message, or a broadcast message.

Step 730: a first dataset is received, where the first dataset is used to train the first AI scheme.

In some embodiments, step 730 refers to that the terminal device receives the first dataset sent by the network device.

The network device sends the dataset via an RRC message, a PDSCH, or a dedicated channel for sending AI/ML models.

The network device indicates the transmission of the first dataset via DCI, an MAC CE, an RRC message, or a broadcast message.

In some embodiments, step 730 may be implemented as steps 731b and 733b, as illustrated in FIG. 10.

Step 731b: a second request message is sent to the network device.

The terminal device sends the second request message to the network device via UCI or an RRC message, where the second request message is used to request the network device to send the first dataset.

Step 733b: the first dataset sent by the network device is received.

The network device sends the first dataset via an RRC message, a PDSCH, or a dedicated channel for sending AI/ML models.

The network device indicates the transmission of the first dataset via DCI, an MAC CE, an RRC message, or a broadcast message.

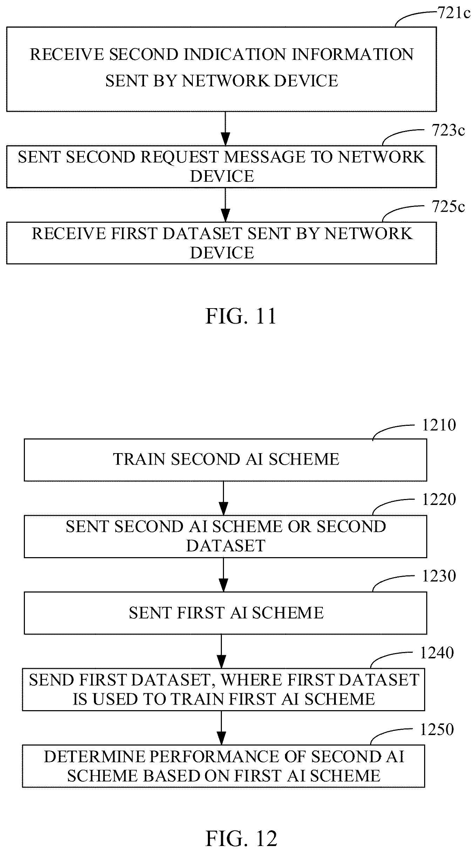

In some embodiments, step 730 may be implemented as steps 731c, 733c, and 735c, as illustrated in FIG. 11.

Step 731c: second indication information sent by the network device is received.

The network device sends the second indication information via at least one of DCI, an MAC CE, RRC signaling, an RRC reconfiguration message, system broadcast, an MIB, an SIB, or SIB2. The second indication information is used to indicate or notify that the first AI scheme is used to determine the performance of the second AI scheme, or is used to indicate or notify that the first dataset is used to determine the performance of the second AI scheme.

Step 733c: a second request message is sent to the network device.

The terminal device sends the second request message to the network device via UCI or an RRC message, where the second request information is used to request the network device to send the first dataset.

Step 735c: the first dataset sent by the network device is received.

The network device sends the first dataset via an RRC message, a PDSCH, or a dedicated channel for sending AI/ML models.

The network device indicates the transmission of the first dataset via DCI, an MAC CE, an RRC message, or a broadcast message.

Step 740: the first AI scheme is trained based on the first dataset.

Step 750: first output information is obtained through inputting first input information into the first AI scheme.

The first input information of the first AI scheme includes feature information and/or data information corresponding to the feature information.

The feature information refers to at least one of feature information corresponding to an input interface of the second AI scheme, feature information corresponding to an output interface of the second AI scheme, or feature information corresponding to an intermediate interface of the second AI scheme. That is, the feature information refers to feature information of part of or all the interfaces of the second AI scheme. The data information refers to data information obtained by performing data processing on the feature information.

In some embodiments, the feature information includes at least one of the following: channel state information reference signal (CSI-RS); time-domain channel; frequency-domain channel; feature vector; CSI reporting information; precoding matrix indicator (PMI) information; beam measurement result; beam identity (ID); beam configuration scheme; predicted result of beam quality; channel impulse response (CIR) information; reference signal received power (RSRP) information; time difference of arrival (TDOA) information; direction of arrival (DOA) information; line-of-sight (LOS) information; non-line-of-sight (NLOS) information; or angle-of-arrival (AOA) information.

In some embodiments, the data processing includes at least one of: averaging, merging, statistical distribution, fast fourier transform (FFT), inverse fast fourier transform (IFFT), or singular value decomposition (SVD).

In some embodiments, the first output information includes at least one of the following:
use of the second AI scheme;
non-use of the second AI scheme;
a performance of the second AI scheme being better than a performance of a comparison scheme;
the performance of the second AI scheme being not better than the performance of the comparison scheme;
a probability that the performance of the second AI scheme is better than the performance of the comparison scheme; or
a confidence probability of the second AI scheme.

The comparison scheme refers to a scheme, other than the second AI scheme, for performing the first communication task.

In some embodiments, the second AI scheme has *M* interfaces, where *M* is a positive integer, such as at least one of: input and output interfaces of the second AI scheme trained by the network device; input and output interfaces of the second AI scheme jointly trained by the terminal device and the network device; input and output interfaces of the first federated sub-scheme; input and output interfaces of the second federated sub-scheme; or a model intermediate layer other than the above interfaces. These interface information, or processed information of these interface information (e.g., obtained through at least one of: averaging, merging, statistical distribution, FFT/IFFT in specific dimensions, SVD, etc.), may be used as the first input information of the first AI scheme. The first output information of the first AI scheme is used to determine whether the second AI scheme is to be used to perform the first communication task, such as whether the second AI scheme is available, whether the second AI scheme outperforms the comparison scheme, a probability of recommending use of the second AI scheme, or a probability that the second AI scheme outperforms the comparison scheme.

The following will provide an exemplary illustration.
1. Taking the first communication task as CSI compression, and/or CSI recovery, and/or CSI prediction as an example.

In this case, the first input information includes at least one of the following.

### • Input information of the second AI scheme used for CSI compression

For example, input information of a CSI encoder (compression model) is included, such as CSI-RS, time-domain channel, frequency-domain channel *H,* feature vector *W,* or information obtained by performing data processing (e.g., at least one of averaging, merging, statistical distribution, FFT/IFFT in specific dimensions, SVD, etc.) on the above CSI-RS, channel, or feature vector is included.

### • Output information of the second AI scheme used for CSI compression

For example, output information of the CSI encoder (compression model) is included, such as CSI reporting information, PMI information, or information obtained by performing processing (e.g., at least one of averaging, merging, statistical distribution, FFT/IFFT in specific dimensions, SVD, etc.) on the above information is included.

### • Input information of the second AI scheme used for CSI recovery

For example, input information of a CSI decoder (recovery model) is included, such as CSI reporting information, PMI information, or information obtained by performing processing (e.g., at least one of averaging, merging, statistical distribution, FFT/IFFT in specific dimensions, SVD, etc.) on the above information is included.

### • Output information of the second AI scheme used for CSI recovery

For example, output information of the CSI decoder (recovery model) is included, such as time-domain channel, frequency-domain channel *H,* feature vector *W,* or information obtained by performing processing (e.g., at least one of averaging, merging, statistical distribution, FFT/IFFT in specific dimensions, SVD, etc.) on the above CSI-RS, channel, or feature vector is included.

### • Input information of the second AI scheme used for CSI prediction

For example, input information of a CSI prediction scheme (e.g., a model) is included, such as CSI-RS, time-domain channel, frequency-domain channel *H,* feature vector *W,* or information obtained by performing processing (e.g., at least one of averaging, merging, statistical distribution, FFT/IFFT in specific dimensions, SVD, etc.) on the above CSI-RS, channel, or feature vector is included.

### • Output information of the second AI scheme used for CSI prediction

For example, output information of the CSI prediction scheme (e.g., a model) is included, such as CSI-RS, time-domain channel, frequency-domain channel *H,* feature vector *W,* or information obtained by performing processing (e.g., at least one of averaging, merging, statistical distribution, FFT/IFFT in specific dimensions, SVD, etc.) on the above CSI-RS, channel, or feature vector is included.

It may be noted that, the above first input information may be embodied as one or more pieces of information, or may refer to information obtained once or multiple times, for example, information obtained multiple times in time domain serves as the first input information. For example, a CSI-RS periodically serves as the first input information in time domain, or output information outputted by the CSI encoder multiple times serves as the first input information.

The first output information includes at least one of the following.

### • A determination result indicating that the second AI scheme is available

For example, based on input channel *H* or feature vector *W,* it is determined that the second AI scheme can be used to perform the first communication task when input channel *H* or feature vector W is used as input.

### • non-use of the second AI scheme

For example, based on input channel *H* or feature vector *W,* it is determined that the second AI scheme cannot be used to perform the first communication task when channel *H* or feature vector *W* is used as input.

### • The performance of the second AI scheme being better than the performance of the comparison scheme

For example, based on input feature vector *W,* it is determined that the performance of the second AI scheme is better than that of the comparison scheme when feature vector W is used as input, meaning that using the second AI scheme to perform the first communication task yields better results than using the comparison scheme to perform the first communication task.

For example, based on input CSI reporting information *S,* it is determined that the performance of the second AI scheme is better than that of the comparison scheme when information S is used as input, meaning that using the second AI scheme to perform the first communication task yields better results than using the comparison scheme to perform the first communication task.

The comparison scheme may be Type 1, Type 2, enhanced Type 2 (eType2) CSI feedback, a CSI compression scheme (e.g., model) based on an AI/ML mode other than the second AI scheme, or a CSI recovery scheme (e.g., model) based on an AI/ML mode other than the second AI scheme.

### • The performance of the second AI scheme being not better than the performance of the comparison scheme

For example, based on input feature vector *W,* it is determined that the performance of the second AI scheme is not better than that of the comparison scheme when feature vector *W* is used as input, meaning that using the second AI scheme to perform the first communication task does not yield better results than using the comparison scheme to perform the first communication task.

For example, based on input CSI reporting information *S,* it is determined that the performance of the second AI scheme is not better than that of the comparison scheme when information *S* is used as input, meaning that using the second AI scheme to perform the first communication task does not yield better results than using the comparison scheme to perform the first communication task.

The comparison scheme may be Type 1, Type 2, eType2 CSI feedback, a CSI compression scheme (e.g., model) based on an AI/ML mode other than the second AI scheme, or a CSI recovery scheme (e.g., model) based on an AI/ML mode other than the second AI scheme.

### • A probability that the performance of the second AI scheme is better than the performance of the comparison scheme

For example, based on input CSI reporting information S, it is determined that the probability that the performance of the second AI scheme is better than that of the comparison scheme is *P1* when information S is used as input, or a probability that the performance of the second AI scheme is not better than that of the comparison scheme is *P2* when information S is used as input.

The comparison scheme may be Type 1, Type 2, eType2 CSI feedback, a CSI compression scheme (e.g., model) based on an AI/ML mode other than the second AI scheme, or a CSI recovery scheme (e.g., model) based on an AI/ML mode other than the second AI scheme.

### • A confidence probability of the second AI scheme

For example, based on input feature vector W, it is determined that the confidence probability for the result of the second AI scheme is *Q* when vector *W* is used as input.

In some embodiments, the first input signal is quantized. The first input signal refers to a signal input into the first AI scheme. Quantization refers to the process of approximating continuous values (or a large number of possible discrete values) of a signal into a finite number (or a smaller number) of discrete values.

The quantization includes at least one of the following: uniform quantization; non-uniform quantization; Int4 format-based quantization; Int8 format-based quantization; float16 format-based quantization; float32 format-based quantization; or float64 format-based quantization.

Uniform quantization may be *N*-bit uniform quantization within a given range, such as N-bit uniform quantization within the range of [-1, 1] or [0, 1]. The uniform quantization scheme may be predefined by a communication protocol, determined by the network device, or determined by the terminal device. The non-uniform quantization scheme may be predefined by a communication protocol, determined by the network device, or determined by the terminal device.

### 2. Taking a first communication task as beam selection and/or beam prediction as an example

The first input information includes at least one of the following.

### • Channel quality information

For example, CSI-RS, time-domain channel, frequency-domain channel *H*, feature vector *W,* or information obtained by performing processing (e.g., at least one of averaging, merging, statistical distribution, FFT/IFFT in specific dimensions, SVD, etc.) on the above CSI-RS, channel, or feature vector is included.

### • Input information of the second AI scheme used for beam selection

For instance, input information of a beam selection scheme (e.g., a model) is included. For example, measurement results of *K* beams, and/or beam IDs of the *K* beams, and/or beam configuration schemes of the *K* beams are included, such as measurement results of 4 transmit beams, beam IDs of the 4 transmit beams, angle and width information of the 4 transmit beams, etc., are included. Alternatively, information obtained by performing processing (e.g., at least one of averaging, merging, statistical distribution, FFT/IFFT in specific dimensions, SVD, etc.) on the above beam information is included.

### • Input information of the second AI scheme used for beam prediction

For instance, input information of a beam prediction scheme (e.g., a model) is included. For example, measurement results of *K* beams, and/or beam IDs of the *K* beams, and/or beam configuration schemes of the *K* beams are included, where *K* is a positive integer. For example, measurement results of 4 transmit beams, beam IDs of the 4 transmit beams, angle and width information of the 4 transmit beams, etc., are included. Alternatively, information obtained by performing processing (e.g., at least one of averaging, merging, statistical distribution, FFT/IFFT in specific dimensions, SVD, etc.) on the above beam information is included.

### • Output information of the second AI scheme used for beam selection

For instance, output information of a beam selection scheme (e.g., a model) is included. For example, measurement results of *K* beams, and/or beam IDs of the *K* beams, and/or beam configuration schemes of the *K* beams, such as measurement results of 4 transmit beams, beam IDs of 4 transmit beams, angle and width information of 4 transmit beams, etc., are included. Alternatively, information obtained by performing processing (e.g., at least one of averaging, merging, statistical distribution, FFT/IFFT in specific dimensions, SVD, etc.) on the above beam information is included.

### • Output information of the second AI scheme used for beam prediction

For instance, output information of a beam prediction scheme (e.g., a model) is included. For example, measurement results of *L* beams, and/or beam IDs of the *L* beams, and/or beam configuration schemes of the L beams are included, where L is a positive integer. For example, measurement results of 64 transmit beams, angle and width information of 64 transmit beams, etc., are included. Alternatively, information obtained by performing processing (e.g., at least one of averaging, merging, statistical distribution, FFT/IFFT in specific dimensions, SVD, etc.) on the above beam information is included.

It may be noted that, the above first input information may be embodied as one or more pieces of information, or may refer to information obtained once or multiple times, for example, information obtained multiple times in time domain serves as the first input information. For example, a CSI-RS periodically serves as the first input information in time domain, or output information outputted by the CSI encoder multiple times serves as the first input information.

The first output information includes at least one of the following.

### • A determination result indicating that the second AI scheme is available

For example, based on input channel *H* or feature vector *W,* it is determined that the second AI scheme can be used to perform the first communication task when input channel *H* or feature vector W is used as input.

### • non-use of the second AI scheme

For example, based on input channel *H* or feature vector *W,* it is determined that the second AI scheme cannot be used to perform the first communication task when channel *H* or feature vector *W* is used as input.

### • The performance of the second AI scheme being better than the performance of the comparison scheme

For example, based on a beam measurement result, it is determined that the performance of the second AI scheme is better than that of the comparison scheme, meaning that using the second AI scheme to perform the first communication task yields better results than using the comparison scheme to perform the first communication task.

The comparison scheme may be a beam selection scheme (e.g., a model) based on an AI/ML model other than the second AI scheme, or a beam prediction scheme (e.g., model) based on an AI/ML mode other than the second AI scheme.

### • The performance of the second AI scheme being not better than the performance of the comparison scheme

For example, based on a beam measurement result, it is determined that the performance of the second AI scheme is not better than that of the comparison scheme, meaning that using the second AI scheme to perform the first communication task does not yield better results than using the comparison scheme to perform the first communication task.

The comparison scheme may be a beam selection scheme (e.g., a model) based on an AI/ML model other than the second AI scheme, or a beam prediction scheme (e.g., model) based on an AI/ML mode other than the second AI scheme.

### • A probability that the performance of the second AI scheme is better than the performance of the comparison scheme

For example, based on input historical beam measurement result S, it is determined that the probability that the performance of the second AI scheme is better than that of the comparison scheme is *P1* when S is used as input, or a probability that the performance of the second AI scheme is not better than that of the comparison scheme is *P2* when S is used as input.

The comparison scheme may be a beam selection scheme (e.g., a model) based on an AI/ML model other than the second AI scheme, or a beam prediction scheme (e.g., model) based on an AI/ML mode other than the second AI scheme.

### • A confidence probability of the second AI scheme

For example, based on an input beam measurement result, it is determined that the confidence probability for the result of the second AI scheme is *Q.*

In some embodiments, the first input signal is quantized. The first input signal refers to a signal input into the first AI scheme. Quantization refers to the process of approximating continuous values (or a large number of possible discrete values) of a signal into a finite number (or a smaller number) of discrete values.

The quantization includes at least one of the following: uniform quantization; non-uniform quantization; Int4 format-based quantization; Int8 format-based quantization; float16 format-based quantization; float32 format-based quantization; float64 format-based quantization, RSRP value-based quantization; RSRP range-based quantization; reference signal received quantity (RSRQ) value-based quantization; RSRQ range-based quantization; signal to interference plus noise ratio (SINR) value-based quantization; or SINR range-quantization.

Uniform quantization may be *N*-bit uniform quantization within a given range, such as N-bit uniform quantization within the range of [-1, 1] or [0, 1]. Uniform quantization scheme may be predefined by a communication protocol, determined by the network device, or determined by the terminal device. Non-uniform quantization scheme may also be predefined by a communication protocol, determined by a network device, or determined by a terminal device.

In some embodiments, *R* bits indicate at least one of an RSPR value, an RSPR range, an RSRQ value, an RSRQ range, an SINR value, or an SINR range, each being quantized with a step size of *k* decibels (dB).

### 3. Taking the first communication task as an example

The first input information includes at least one of the following.

### • Channel quality information

For example, CSI-RS, time-domain channel, frequency-domain channel *H*, feature vector W, or information obtained by performing data processing (e.g., at least one of averaging, merging, statistical distribution, FFT /IFFT in specific dimensions, SVD, etc.) on the above CSI-RS, channel, or feature vector, is included.

### • Input information of the second AI scheme used for positioning

For instance, input information of a positioning scheme (e.g., a model) is included. For example, at least one of CIR information of a positioning base, RSRP information of the positioning base, TDOA information of the positioning base, DOA information of the positioning base is included. Alternatively, information obtained by performing processing (e.g., at least one of averaging, merging, statistical distribution, FFT /IFFT in specific dimensions, SVD, etc.) on the above information is included.

### • Output information of the second AI scheme used for positioning

For example, output information of an indirect positioning scheme (e.g., a model), such as at least one of TOA, TDOA, LOS/NLOS determination, or AOA information corresponding to multiple positioning nodes or network devices is included. Alternatively, information obtained by performing processing (e.g., at least one of averaging, merging, statistical distribution, FFT/IFFT in specific dimensions, SVD, etc.) on the above information is included.

It may be noted that, the above first input information may be embodied as one or more pieces of information, or may refer to information obtained once or multiple times, for example, information obtained multiple times in time domain serves as the first input information.

The first output information includes at least one of the following.

### • A determination result indicating that the second AI scheme is available

For example, based on input channel *H* or feature vector *W,* it is determined that the second AI scheme can be used to perform the first communication task when input channel H or feature vector *W* is used as input.

### • non-use of the second AI scheme

For example, based on input channel *H* or feature vector *W,* it is determined that the second AI scheme cannot be used to perform the first communication task when channel *H* or feature vector *W* is used as input.

### • The performance of the second AI scheme being better than the performance of the comparison scheme

For example, based on positioning information (CIR, RSRP, etc.) of multiple base stations, it is determined that the performance of the second AI scheme is better than that of the comparison scheme, meaning that using the second AI scheme to perform the first communication task yields better results than using the comparison scheme to perform the first communication task.

The comparison scheme may be a positioning scheme (e.g., a model) based on an AI/ML mode other than the second AI scheme, or a positioning scheme (e.g., a model) based on an AI/ML mode other than the second AI scheme. The comparison scheme may be an AI/ML-based scheme or not an AI/ML-based scheme.

### • The performance of the second AI scheme being not better than the performance of the comparison scheme

For example, based on positioning information (CIR, RSRP, etc.) of multiple base stations, it is determined that the performance of the second AI scheme is not better than that of the comparison scheme, meaning that using the second AI scheme to perform the first communication task does not yield better results than using the comparison scheme to perform the first communication task.

The comparison scheme may be a positioning scheme (e.g., a model) based on an AI/ML model other than the second AI scheme, or a positioning scheme (e.g., model) based on an AI/ML mode other than the second AI scheme. The comparison scheme may be an AI/ML-based scheme or not an AI/ML-based scheme.

### • A probability that the performance of the second AI scheme is better than the performance of the comparison scheme

For example, based on at least one of CIR, RSRP, RSRQ, TOA, TDOA, AOA information of at least one of positioning nodes (or network devices), it is determined that the probability that the performance of the second AI scheme is better than that of the comparison scheme is *P1,* or a probability that the performance of the second AI scheme is not better than that of the comparison scheme is *P2.*

The comparison scheme may be a positioning scheme (e.g., a model) based on an AI/ML model other than the second AI scheme, or a positioning scheme (e.g., model) based on an AI/ML mode other than the second AI scheme. The comparison scheme may be an AI/ML-based scheme or not an AI/ML-based scheme.

### • A confidence probability of the second AI scheme

For example, based on a positioning measurement result, it is determined that the confidence probability for the result of the second AI scheme is *Q.*

In some embodiments, the first input signal is quantized. The first input signal refers to a signal input into the first AI scheme. Quantization refers to the process of approximating continuous values (or a large number of possible discrete values) of a signal into a finite number (or a smaller number) of discrete values.

The quantization includes at least one of the following: uniform quantization; non-uniform quantization; Int4 format-based quantization; Int8 format-based quantization; float16 format-based quantization; float32 format-based quantization; float64 format-based quantization, RSRP value-based quantization; RSRP range-based quantization; RSRQ value-based quantization; RSRQ range-based quantization; SINR value-based quantization; or SINR range-quantization.

Uniform quantization may be N-bit uniform quantization within a given range, such as N-bit uniform quantization within the range of [-1, 1] or [0, 1]. Uniform quantization scheme may be predefined by a communication protocol, determined by the network device, or determined by the terminal device. Non-uniform quantization scheme may also be predefined by a communication protocol, determined by the network device, or determined by the terminal device.

In some embodiments, *R* bits indicate at least one of an RSPR value, an RSPR range, an RSRQ value, an RSRQ range, an SINR value, or an SINR range, each being quantized with a step size of *k* decibels (dB).

In some embodiments, the first AI scheme and the second AI scheme may be combined into a single scheme. Input information of, part of input information of, output information of, part of output information of, auxiliary information of, or part of auxiliary information of the combined scheme may be input information of the first AI scheme (i.e., the first input information), output information of the first AI scheme (the first output information), or auxiliary information of the first AI scheme (i.e., information assisting or participating in the execution of the first AI scheme).

Step 760: the performance of the second AI scheme is determined based on the first output information.

Steps 750 and 760 thus correspond to determining the performance of the second AI scheme based on the first AI scheme.

In some embodiments, prior to executing the first communication task using the second AI scheme, the performance of the second AI scheme is determined based on the first AI scheme.

The performance of AI/ML-based wireless communication schemes is directly related to the scenario and data used during the training of the model. If the data to be tested is unrelated to or significantly different from the data used in model training, the reliability of using the current AI/ML model, the reliability of the result of the current AI/ML mode, and whether the current AI/ML model can offer advantages over a comparative scheme can be directly determined based on the data to be tested. In the present embodiment, when the second AI scheme is trained at one end (e.g., trained by a network device, or partially trained at the network device side), the network device may, during the process of training or acquiring the second AI scheme, also construct, based on both target and non-target datasets, the first AI scheme used to evaluate the performance of the second AI scheme, and send the first AI scheme to the terminal device for use, or send corresponding training data for the first AI scheme to the terminal device for use.

In summary, compared with a scheme in which performance evaluation is performed based on information such as a test dataset, label data, inference results of and effectiveness of use of a target task model in related art, in the method provided in the present disclosure, the AI/ML-based performance evaluation method can enable performance evaluation of the second AI scheme without excessive reliance on such information. In addition, the network device can directly utilize the dataset used to construct the second AI scheme and the local performance evaluation result of the second AI scheme to construct the first AI scheme, thereby improving the flexibility and simplicity in constructing the first AI scheme. Since such information is unavailable to the terminal device, sending the first AI scheme or a dataset for the first scheme over an air interface can ensure the effectiveness of the first AI scheme or the effectiveness of the dataset for the first AI scheme, and enable the terminal device to directly use the first AI scheme or construct the first AI scheme based on the first dataset. This allows the terminal device to perform performance monitoring, model selection, or model updating for the second AI scheme based on AI/ML.

Considering that, in AI-based wireless communication schemes, when the second AI scheme or part of the second AI scheme needs to be exchanged, e.g., sent from the network device to the terminal device, there is a need for enabling the terminal device to quickly and effectively determine the performance of the second AI scheme. A method is provided in which the network device constructs the first AI scheme and sends the first AI scheme over the air interface to the terminal device for use in performance monitoring of the second AI scheme. By means of this method, the terminal device can determine whether the second AI scheme is usable based on the data and environmental characteristics before using the second AI scheme, thereby enabling a pre-use performance evaluation. Moreover, this method avoids reliance on test datasets, label data, or monitoring and evaluation of inference results from a target task model. The availability of a pre-constructed performance evaluation model allows determination of whether the second AI scheme is suitable for use.

FIG. 12 is a flow chart of a method for performance determination according to some exemplary embodiments of the present disclosure. The method is executed by the network device as illustrated in FIG. 5 and includes at least some of the following steps.

Step 1210: a second AI scheme is trained.

The second AI scheme is used to execute a first communication task. The first communication task refers to a communication-related task, such as at least one of CSI compression, CSI recovery, CSI prediction, beam selection, beam prediction, or positioning.

Step 1220: the second AI scheme or a second dataset is sent.

In some embodiments, the second AI scheme is trained by the network device. The network device sends the second AI scheme to a terminal device.

In some embodiments, the second AI scheme is jointly trained by the network device and the terminal device. The second AI scheme includes a first federated sub-scheme and a second federated sub-scheme. The network device trains the first federated sub-scheme and sends the second dataset to the terminal device. The terminal device trains the second federated sub-scheme based on the second dataset.

Step 1230: a first AI scheme is sent.

In some embodiments, step 1230 refers to that the network device sends the first AI scheme to the terminal device. The first AI scheme is trained by the network device, and the network device sends the trained first AI scheme to the terminal device.

The network device sends the first AI scheme via an RRC message, a PDSCH, or a dedicated channel for sending AI/ML models.

The network device may indicate the transmission of the first AI scheme via DCI, an MAC CE, an RRC message, or a broadcast message.

In some embodiments, step 1230 may be implemented as step (a) and step (b).

Step (a): a first request message sent by the terminal device is received.

The terminal device sends the first request message to the network device via UCI or an RRC message, where the first request message is used to request the network device to send the first AI scheme.

Step (b): the first AI scheme is sent to the terminal device;

The first AI scheme is trained by the network device, and the network device sends the constructed first AI scheme to the terminal device.

The network device sends the first AI scheme via an RRC message, a PDSCH, or a dedicated channel for sending AI/ML models.

The network device indicates the transmission of the first AI scheme via DCI, an MAC CE, an RRC message, or a broadcast message.

In some embodiments, step 1230 may be implemented as step (i), step (ii), and step (iii).

Step (i): first indication information is sent to the terminal device;

The network device sends the first indication information via at least one of DCI, an MAC CE, RRC signaling, an RRC reconfiguration message, system broadcast, an MIB, an SIB, or SIB1. The first indication information is used to indicate or notify that the first AI scheme is used to determine the performance of the second AI scheme.

Step (ii): the first request message sent by the terminal device is received.

The terminal device sends the first request message to the network device via UCI or an RRC message, where the first request message is used to request the network device to send the first AI scheme.

Step (iii): the first AI scheme is sent to the terminal device;

The first AI scheme is trained by the network device, and the network device sends the constructed first AI scheme to the terminal device.

The network device sends the first AI scheme via an RRC message, a PDSCH, or a dedicated channel for sending AI/ML models.

The network device indicates the transmission of the first AI scheme via DCI, an MAC CE, an RRC message, or a broadcast message.

Step 1240: a first dataset is sent, where the first dataset is used to train the first AI scheme.

In some embodiments, step 1240 refers to that the network device sends the first dataset to the terminal device.

The network device sends the dataset via an RRC message, a PDSCH, or a dedicated channel for sending AI/ML models.

The network device indicates the transmission of the first AI scheme via DCI, an MAC CE, an RRC message, or a broadcast message.

In some embodiments, step 1240 may be implemented as step (c) and step (d).

Step (c): a second request message sent by the terminal device is received.

The terminal device sends the second request message to the network device via UCI or an RRC message, where the second request message is used to request the network device to send the first dataset.

Step (d): the first dataset is sent to the terminal device.

The network device sends the first dataset via an RRC message, a PDSCH, or a dedicated channel for sending AI/ML models.

The network device indicates the transmission of the first dataset via DCI, an MAC CE, an RRC message, or a broadcast message.

In some embodiments, step 1240 may be implemented as step (e), step (f), and step (g).

Step (e): second indication information is sent to the terminal device.

The network device sends the second indication information via at least one of DCI, an MAC CE, RRC signaling, an RRC reconfiguration message, system broadcast, an MIB, an SIB, or SIB2. The second indication information is used to indicate or notify that the first AI scheme is used to determine the performance of the second AI scheme, or the second indication information is used to indicate or notify that the first dataset is used to determine the performance of the second AI scheme.

Step (f): a second request message sent by the terminal device is received.

The terminal device sends the second request message to the network device via UCI or an RRC message, where the second request message is used to request the network device to send the first dataset.

Step (g): the first dataset is sent to the terminal device.

The network device sends the first dataset via an RRC message, a PDSCH, or a dedicated channel for sending AI/ML models.

The network device indicates the transmission of the first dataset via DCI, an MAC CE, an RRC message, or a broadcast message.

Step 1250: the performance of the second AI scheme is determined based on the first AI scheme.

Determining the performance of the second AI scheme based on the first AI scheme may be understood as using the first AI scheme to determine the performance of the second AI scheme, or obtaining the performance of the second AI scheme after execution of the first AI scheme.

In some embodiments, before executing the first communication task using the second AI scheme, the performance of the second AI scheme is determined based on the first AI scheme.

For details, reference can be made to step 750 and step 760, which are not repeated herein.

In summary, compared with a scheme in which performance evaluation is performed based on information such as a test dataset, label data, inference results of and effectiveness of use of a target task model in related art, in the method provided in the present disclosure, the AI/ML-based performance evaluation method can enable performance evaluation of the second AI scheme without excessive reliance on such information. In addition, the network device can directly utilize the dataset used to construct the second AI scheme and the local performance evaluation result of the second AI scheme to construct the first AI scheme, thereby improving the flexibility and simplicity in constructing the first AI scheme. The network device further sends the first AI scheme or a dataset for the first AI scheme to the terminal device. This not only ensures the effectiveness of the first AI scheme or the effectiveness of the dataset for the first AI scheme, but also enables the terminal device to directly use the first AI scheme or construct the first AI scheme based on the first dataset, allowing the terminal device to perform performance monitoring, model selection, or model updating for the second AI scheme based on AI/ML.

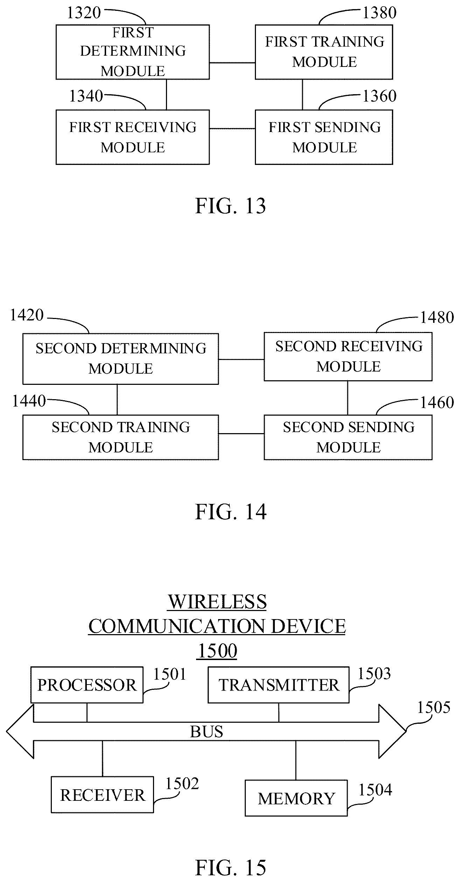

FIG. 13 is a structural block diagram of an apparatus for performance determination according to some exemplary embodiments of the present disclosure. The apparatus includes at least part of the following modules: a first determining module 1320, a first receiving module 1340, a first sending module 1360, or a first training module 1380.

The first determining module 1320 is configured to determine a performance of a second AI scheme based on a first AI scheme, where the second AI scheme is used to perform a first communication task.

In some embodiments, the apparatus further includes the first receiving module 1340 configured to receive the first AI scheme sent by a network device.

In some embodiments, the apparatus further includes the first sending module 1360 configured to send a first request message to the network device, where the first request message is used to request the network device to send the first AI scheme.

In some embodiments, the first receiving module 1340 is configured to receive first indication information sent by the network device, where the first indication information is used to indicate or notify that the first AI scheme is used to determine the performance of the second AI scheme.

In some embodiments, the apparatus further includes the first training module 1380 configured to train the first AI scheme based on a first dataset.

In some embodiments, the first receiving module 1340 is configured to receive the first dataset sent by the network device.

In some embodiments, the first sending module 1360 is configured to send a second request message to the network device, where the second request message is used to request the network device to send the first dataset.

In some embodiments, the first receiving module 1340 is configured to receive second indication information sent by the network device, where the second indication information is used to indicate or notify that the first dataset is used to determine the performance of the second AI scheme.

In some embodiments, the first determining module 1320 is configured to obtain first output information by inputting first input information into the first AI scheme; and determine the performance of the second AI scheme based on the first output information. The first input information includes feature information and/or data information corresponding to the feature information. The feature information refers to at least one of: feature information corresponding to an input interface of the second AI scheme, feature information corresponding to an output interface of the second AI scheme, or feature information corresponding to an intermediate interface of the second AI scheme, and the data information refers to data information obtained by performing data processing on the feature information.

In some embodiments, the feature information includes at least one of the following: CSI-RS; time-domain channel; frequency-domain channel; feature vector; CSI reporting information; PMI information; beam measurement result; beam ID; beam configuration scheme; predicted result of beam quality; CIR information; RSRP information; TDOA information; DOA information; LOS information; NLOS information; or AOA information.

In some embodiments, the first output information includes at least one of:
- use of the second AI scheme;
- non-use of the second AI scheme;
- the performance of the second AI scheme being better than a performance of a comparison scheme;
- the performance of the second AI scheme being not better than the performance of the comparison scheme;
- a probability that the performance of the second AI scheme being better than the performance of the comparison scheme; or
- a confidence probability of the second AI scheme;
where the comparison scheme refers to a scheme, other than the second AI scheme, for performing the first communication task.

In some embodiments, the first determining module 1320 is further configured to perform quantization on the first input signal.

In some embodiments, the quantization includes at least one of the following: uniform quantization; non-uniform quantization; Int4 format-based quantization; Int8 format-based quantization; float16 format-based quantization; float32 format-based quantization; float64 format-based quantization; RSRP value-based quantization; RSRP range-based quantization; RSRQ value based-quantization; RSRQ range-quantization; SINR value-based quantization; or SINR range-quantization.

In some embodiments, the first training module 1380 is configured to train the second AI scheme.

In some embodiments, the first receiving module 1340 is configured to receive the second AI scheme sent by the network device.

In some embodiments, the first receiving module 1340 is configured to receive a second dataset sent by the network device. The first training module 1380 is configured to train the second AI scheme based on the second dataset.

In some embodiments, the first receiving module 1340 is configured to receive the second dataset sent by the network device. The first training module 1380 is configured to train a second federated sub-scheme based on the second dataset. The second AI scheme includes the second federated sub-scheme and a first federated sub-scheme, and the first federated sub-scheme is trained by the network device.

In some embodiments, the first communication task is used for at least one of the following: CSI compression; CSI recovery; CSI prediction; beam selection; beam prediction; or positioning.

In summary, the apparatus provided in the present embodiment determines the performance of the second AI scheme based on the first AI scheme, without relying on the execution result of the second AI scheme, thereby improving the flexibility of performance determination for AI-based communication schemes. Moreover, the terminal device can directly use the first AI scheme sent by the network device or construct the first AI scheme based on the first dataset sent by the network device. This not only ensures the effectiveness of the first AI scheme or the effectiveness of the dataset for the first AI scheme, but also enhances the flexibility and simplicity in constructing the first AI scheme, enabling the terminal device to perform performance monitoring, model selection, and model updating for the second AI scheme based on AI/ML.

FIG. 14 is a block diagram of an apparatus for performance determination according to some exemplary embodiments of the present disclosure. The apparatus includes at least part of the following modules: a second determining module 1420, a second training module 1440, a second sending module 1460, or a second receiving module 1480.

The second determining module 1420 is configured to determine a performance of a second AI scheme based on a first AI scheme, where the second AI scheme is used to perform a first communication task.

In some embodiments, the apparatus further includes the second training module 1440 configured to train the first AI scheme.

In some embodiments, the apparatus further includes the second sending module 1460 configured to send the first AI scheme to a terminal device.

In some embodiments, the apparatus further includes the second receiving module 1480 configured to receive a first request message sent by the terminal device, where the first request message is used to request the network device to send the first AI scheme.

In some embodiments, the second sending module 1460 is configured to send first indication information to the terminal device, where the first indication information is used to indicate or notify that the first AI scheme is used to determine the performance of the second AI scheme.

In some embodiments, the second sending module 1460 is configured to send a first dataset to the terminal device.

In some embodiments, the second receiving module 1480 is configured to receive a second request message sent by the terminal device, where the second request message is used to request the network device to send the first dataset.

In some embodiments, the second sending module 1460 is configured to send second indication information to the terminal device, where the second indication information is used to indicate or notify that the first dataset is used to determine the performance of the second AI scheme.

In some embodiments, the second training module 1440 is configured to obtain first output information by inputting first input information into the first AI scheme, and determine the performance of the second AI scheme based on the first output information.

The first input information includes feature information and/or data information corresponding to the feature information. The feature information refers to at least one of: feature information corresponding to an input interface of the second AI scheme, feature information corresponding to an output interface of the second AI scheme, or feature information corresponding to an intermediate interface of the second AI scheme, and the data information refers to data information obtained by performing data processing on the feature information.

In some embodiments, the feature information includes at least one of the following: CSI-RS; time-domain channel; frequency-domain channel; feature vector; CSI reporting information; PMI information; beam measurement result; beam ID; beam configuration scheme; predicted result of beam quality; CIR information; RSRP information; TDOA information; DOA information; LOS information; NLOS information; or AOA information.

In some embodiments, the first output information includes at least one of:
- use of the second AI scheme;
- non-use of the second AI scheme;
- the performance of the second AI scheme being better than a performance of a comparison scheme;
- the performance of the second AI scheme being not better than the performance of the comparison scheme;
- a probability that the performance of the second AI scheme being better than the performance of the comparison scheme; or
- a confidence probability of the second AI scheme;
where the comparison scheme refers to a scheme, other than the second AI scheme, for performing the first communication task.

In some embodiments, the second determining module 1420 is further configured to perform quantization on the first input signal.

In some embodiments, the quantization includes at least one of the following: uniform quantization; non-uniform quantization; Int4 format-based quantization; Int8 format-based quantization; float16 format-based quantization; float32 format-based quantization; float64 format-based quantization; RSRP value-based quantization; RSRP range-based quantization; RSRQ value based-quantization; RSRQ range-quantization; SINR value-based quantization; or SINR range-quantization.

In some embodiments, the second AI scheme is trained by the terminal device and/or the network device.

In some embodiments, the second sending module 1460 is configured to send the second AI scheme to the terminal device.

In some embodiments, the second sending module 1460 is configured to send a second dataset to the terminal device, where the second dataset is used to train the second AI scheme.

In some embodiments, the second sending module 1460 is configured to send the second dataset to the terminal device, where the second dataset is used to train a second federated sub-scheme. The second training module 1440 is configured to train a first federated sub-scheme. The second AI scheme includes the second federated sub-scheme and the first federated sub-scheme.

In some embodiments, the first communication task is used for at least one of the following: CSI compression; CSI recovery; CSI prediction; beam selection; beam prediction; or positioning.

In summary, the apparatus provided in the present embodiment determines the performance of the second AI scheme based on the first AI scheme, without relying on the execution result of the second AI scheme, thereby improving the flexibility of performance determination for AI-based communication schemes. Moreover, the terminal device can directly use the first AI scheme sent by the network device or construct the first AI scheme based on the first dataset sent by the network device. This not only ensures the effectiveness of the first AI scheme or the effectiveness of the dataset for the first AI scheme, but also enhances the flexibility and simplicity in constructing the first AI scheme, enabling the terminal device to perform performance monitoring, model selection, and model updating for the second AI scheme based on AI/ML.

It may be noted that, the apparatuses provided in the above embodiments are merely described based on the division of respective functional modules as an example. In practical applications, the above-described functions may be assigned to different functional modules as needed, i.e., the internal structure of the apparatus may be divided into different functional modules to implement all or part of the functions described above.

For the apparatuses in the present embodiments, the specific manner in which each module performs its operations has already been described in detail in the corresponding method embodiments, and will not be repeated here.

FIG. 15 is a schematic structural diagram of a communication device 1500 according to some exemplary embodiments of the present disclosure. The communication device 1500 includes a processor 1501, a receiver 1502, a transmitter 1503, a memory 1504, and a bus 1505.

The processor 1501 includes one or more processing cores, and executes various functional applications and information processing by running software programs and modules. In some embodiments, the processor 1501 may be used to implement the functions and steps of the first determining module 1320, and/or the first training module 1380, and/or the second determining module 1420, and/or the second training module 1440, as described above.

The receiver 1502 and transmitter 1503 may be implemented as a communication component, which may be a communication chip. In some embodiments, the receiver 1502 may be used to implement the functions and steps of the first receiving module 1340 and/or the second receiving module 1480 as described above. In some embodiments, the transmitter 1503 may be used to implement the functions and steps of the first sending module 1360 and/or the second sending module 1460 as described above.

The memory 1504 is connected to the processor 1501 via the bus 1505. The memory 1504 may be used to store at least one instruction, and the processor 1501 is configured to execute the at least one instruction to implement various steps of the method embodiments described above.

Further, the memory 1504 may be implemented using any type of volatile or non-volatile storage device, or a combination thereof. The volatile or non-volatile storage device may include, but is not limited to: a magnetic disk or an optical disk, an electrically erasable programmable read-only memory (EEPROM), an erasable programmable read-only memory (EPROM), a static random-access memory (SRAM), a read-only memory (ROM), a magnetic memory, a flash memory, or a programmable read-only memory (PROM).

In some embodiments, the receiver 1502 may receive signals/data independently, or the processor 1501 may control the receiver 1502 to receive signals/data, or the processor 1501 may request the receiver 1502 to receive signals/data, or the processor 1501 may cooperate with the receiver 1502 to receive signals/data.

In some embodiments, the transmitter 1503 may transmit signals/data independently, or the processor 1501 may control the transmitter 1503 to transmit signals/data, or the processor 1501 may request the transmitter 1503 to transmit signals/data, or the processor 1501 may cooperate with the transmitter 1503 to transmit signals/data.

In an exemplary embodiment of the present disclosure, a computer-readable storage medium is also provided. The computer-readable storage medium stores at least one program, and the at least one program is loaded and executed by the processor to enable the computer-readable storage medium to implement each method for performance determination provided in the above method embodiments.

In an exemplary embodiment of the present disclosure, a chip is also provided. The chip includes a programmable logic circuit and/or program instructions, and when the chip operates on a communication device, the method for performance determination provided in the above method embodiments is implemented.

In an exemplary embodiment of the present disclosure, a computer program product is also provided. When the computer program product is executed by a processor of a communication device, the communication device is enabled to perform the above-described method for performance determination.

In an exemplary embodiment of the present disclosure, a computer program is further provided. The computer program includes computer instructions. When the computer instructions are executed by a processor of a communication device, the communication device is enabled to perform the above-described method for performance determination.

It may be appreciated by those skilled in the art that, in one or more of the above examples, the functions described in the embodiments of the present disclosure may be implemented using hardware, software, firmware, or any combination thereof. When implemented in software, the functions may be stored in or transmitted as one or more instructions or codes in a computer-readable medium. The computer-readable medium includes a computer storage medium and a communication medium, where the communication medium includes any medium that facilitates the transfer of computer programs from one location to another. The storage medium may be any available medium that can be accessed by a general-purpose or special-purpose computer.

The above illustrations are merely illustrative of optional embodiments of the present disclosure and are not intended to limit the present disclosure. Any modifications, equivalent replacements, improvements, etc., made within the spirit and principles of the present disclosure shall fall within the scope of protection of the present disclosure.

## Claims

1. A method for performance determination, the method being executed by a terminal device and comprising:
determining a performance of a second artificial intelligence (AI) scheme based on a first AI scheme;
wherein the second AI scheme is used to perform a first communication task.

2. The method according to claim 1, wherein prior to determining the performance of the second AI scheme based on the first AI scheme, the method further comprises at least one of:
receiving the first AI scheme sent by a network device;
sending a first request message to the network device, wherein the first request message is used to request the network device to send the first AI scheme; or
receiving first indication information sent by the network device, wherein the first indication information is used to indicate or notify that the first AI scheme is used to determine the performance of the second AI scheme.

3. The method according to claim 1, wherein prior to determining the performance of the second AI scheme based on the first AI scheme, the method further comprises:
training the first AI scheme based on a first dataset.

4. The method according to claim 3, wherein prior to constructing the first AI scheme based on the first dataset, the method further comprises at least one of:
receiving the first dataset sent by a network device;
sending a second request message to the network device, wherein the second request message is used to request the network device to send the first dataset; or
receiving second indication information sent by the network device, wherein the second indication information is used to indicate or notify that the first dataset is used to determine the performance of the second AI scheme.

5. The method according to any one of claims 1 to 4, wherein determining the performance of the second AI scheme based on the first AI scheme comprises:
obtaining first output information by inputting first input information into the first AI scheme; and
determining the performance of the second AI scheme based on the first output information;
wherein the first input information comprises feature information and/or data information corresponding to the feature information;
wherein the feature information refers to at least one of: feature information corresponding to an input interface of the second AI scheme, feature information corresponding to an output interface of the second AI scheme, or feature information corresponding to an intermediate interface of the second AI scheme, and the data information refers to data information obtained by performing data processing on the feature information.

6. The method according to claim 5, wherein the feature information comprises at least one of:
channel state information reference signal (CSI-RS);
time-domain channel;
frequency-domain channel;
feature vector;
CSI reporting information;
precoding matrix indicator (PMI) information;
beam measurement result;
beam identity (ID);
beam configuration scheme;
predicted result of beam quality;
channel impulse response (CIR) information;
reference signal received power (RSRP) information;
time difference of arrival (TDOA) information;
direction of arrival (DOA) information;
line-of-sight (LOS) information;
non-line-of-sight (NLOS) information; or
angle of arrival (AOA) information.

7. The method according to claim 5, wherein the first output information comprises at least one of:
use of the second AI scheme;
non-use of the second AI scheme;
the performance of the second AI scheme being better than a performance of a comparison scheme;
the performance of the second AI scheme being not better than the performance of the comparison scheme;
a probability that the performance of the second AI scheme is better than the performance of the comparison scheme; or
a confidence probability of the second AI scheme;
wherein the comparison scheme is a scheme, other than the second AI scheme, for performing the first communication task.

8. The method according to any one of claims 5 to 7, further comprising:
performing quantization on the first input signal;
wherein the quantization comprises at least one of:
uniform quantization;
non-uniform quantization;
Int4 format-based quantization;
Int8 format-based quantization;
float16 format-based quantization;
float32 format-based quantization;
float64 format-based quantization;
RSRP value-based quantization;
RSRP range-based quantization;
reference signal received quality (RSRQ) value based-quantization;
RSRQ range-quantization;
signal to interference plus noise ratio (SINR) value-based quantization; or
SINR range-quantization.

9. The method according to any one of claims 1 to 8, wherein the second AI scheme is trained by the terminal device and/or by a network device.

10. The method according to claim 9, wherein the second AI scheme is trained by the network device;
wherein prior to determining the performance of the second AI scheme based on the first AI scheme, the method further comprises:
receiving the second AI scheme sent by the network device.

11. The method according to claim 9, wherein the second AI scheme is trained by the terminal device;
wherein prior to determining the performance of the second AI scheme based on the first AI scheme, the method further comprises:
receiving a second dataset sent by the network device;
training the second AI scheme based on the second dataset.

12. The method according to claim 9, wherein the second AI scheme is trained by the terminal device and the network device;
wherein prior to determining the performance of the second AI scheme based on the first AI scheme, the method further comprises:
receiving a second dataset sent by the network device; and
training a second federated sub-scheme based on the second dataset;
wherein the second AI scheme comprises the second federated sub-scheme and a first federated sub-scheme, wherein the first federated sub-scheme is trained by the network device.

13. The method according to any one of claims 1 to 12, wherein the first communication task is used for at least one of:
CSI compression;
CSI recovery;
CSI prediction;
beam selection;
beam prediction; or
positioning.

14. A method for performance determination, the method being executed by a network device and comprising:
determining a performance of a second artificial intelligence (AI) scheme based on a first AI scheme;
wherein the second AI scheme is used to perform a first communication task.

15. The method according to claim 14, wherein prior to determining the performance of the second AI scheme based on the first AI scheme, the method further comprises:
training the first AI scheme.

16. The method according to claim 15, further comprising at least one of:
sending the first AI scheme to a terminal device;
receiving a first request message sent by the terminal device, wherein the first request message is used to request the network device to send the first AI scheme; or
sending first indication information to the terminal device, wherein the first indication information is used to indicate or notify that the first AI scheme is used to determine the performance of the second AI scheme.

17. The method according to claim 15, further comprising at least one of:
sending a first dataset to the terminal device;
receiving a second request message sent by the terminal device, wherein the second request message is used to request the network device to send the first dataset; or
sending second indication information to the terminal device, wherein the second indication information is used to indicate or notify that the first dataset is used to determine the performance of the second AI scheme.

18. The method according to any one of claims 14 to 17, wherein determining the performance of the second AI scheme based on the first AI scheme comprises:
obtaining first output information by inputting first input information into the first AI scheme; and
determining the performance of the second AI scheme based on the first output information;
wherein the first input information comprises feature information and/or data information corresponding to the feature information;
wherein the feature information refers to at least one of: feature information corresponding to an input interface of the second AI scheme, feature information corresponding to an output interface of the second AI scheme, or feature information corresponding to an intermediate interface of the second AI scheme, and the data information refers to data information obtained by performing data processing on the feature information.

19. The method according to claim 18, wherein the feature information comprises at least one of:
channel state information reference signal (CSI-RS);
time-domain channel;
frequency-domain channel;
feature vector;
CSI reporting information;
precoding matrix indicator (PMI) information;
beam measurement result;
beam identity (ID);
beam configuration scheme;
predicted result of beam quality;
channel impulse response (CIR) information;
reference signal received power (RSRP) information;
time difference of arrival (TDOA) information;
direction of arrival (DOA) information;
line-of-sight (LOS) information;
non-line-of-sight (NLOS) information; or
angle of arrival (AOA) information.

20. The method according to claim 18, wherein the first output information comprises at least one of:
use of the second AI scheme;
non-use of the second AI scheme;
the performance of the second AI scheme being better than a performance of a comparison scheme;
the performance of the second AI scheme being not better than the performance of the comparison scheme;
a probability that the performance of the second AI scheme is better than the performance of the comparison scheme; or
a confidence probability of the second AI scheme;
wherein the comparison scheme is a scheme, other than the second AI scheme, for performing the first communication task.

21. The method according to any one of claims 18 to 20, further comprising:
performing quantization on the first input signal;
wherein the quantization comprises at least one of:
uniform quantization;
non-uniform quantization;
Int4 format-based quantization;
Int8 format-based quantization;
float16 format-based quantization;
float32 format-based quantization;
float64 format-based quantization;
RSRP value-based quantization;
RSRP range-based quantization;
reference signal received quality (RSRQ) value-based quantization;
RSRQ range-based quantization;
signal to interference plus noise ratio (SINR) value-based quantization; or
SINR range-based quantization.

22. The method according to any one of claims 14 to 21, wherein the second AI scheme is trained by a terminal device and/or by the network device.

23. The method according to claim 22, wherein the second AI scheme is trained by the network device;
wherein prior to determining the performance of the second AI scheme based on the first AI scheme, the method further comprises:
sending the second AI scheme to the terminal device.

24. The method according to claim 22, wherein the second AI scheme is trained by the terminal device;
wherein prior to determining the performance of the second AI scheme based on the first AI scheme, the method further comprises:
sending a second dataset to the terminal device, wherein the second dataset is used to train the second AI scheme.

25. The method according to claim 22, wherein the second AI scheme is trained by the terminal device and the network device;
wherein prior to determining the performance of the second AI scheme based on the first AI scheme, the method further comprises:
sending a second dataset to the terminal device, wherein the second dataset is used to train a second federated sub-scheme; and
training a first federated sub-scheme;
wherein the second AI scheme comprises the second federated sub-scheme and the first federated sub-scheme.

26. The method according to any one of claims 14 to 25, wherein the first communication task is used for at least one of:
CSI compression;
CSI recovery;
CSI prediction;
beam selection;
beam prediction; or
positioning.

27. An apparatus for performance determination, comprising:
a first determining module configured to determine a performance of a second artificial intelligence (AI) scheme based on a first AI scheme;
wherein the second AI scheme is used to perform a first communication task.

28. An apparatus for performance determination, comprising:
a second determining module configured to determine a performance of a second artificial intelligence (AI) scheme based on a first AI scheme;
wherein the second AI scheme is used to perform a first communication task.

29. A communication device, comprising:
a processor;
a transceiver coupled to the processor; and
a memory configured to store executable instructions of the processor;
wherein the processor is configured to load and execute the executable instructions such that the communication device implements the method for performance determination according to any one of claims 1 to 13 or any one of claims 14 to 26.

30. A computer-readable storage medium, wherein the computer-readable storage medium is configured to store executable instructions, and when the executable instructions are loaded and executed by a processor, the computer-readable storage medium implements the method for performance determination according to any one of claims 1 to 13 or any one of claims 14 to 26.

31. A chip, comprising a programmable logic circuit or a program, wherein the chip is configured to implement the method for performance determination according to any one of claims 1 to 13 or any one of claims 14 to 26.

32. A computer program product, comprising computer instructions stored in a computer-readable storage medium, wherein when a processor of a communication device reads the computer instructions from the computer-readable storage medium and executes the computer instructions, the communication device is enabled to perform the method for performance determination according to any one of claims 1 to 13 or any one of claims 14 to 26.

33. A computer program, comprising computer instructions, wherein when a processor of a communication device executes the computer instructions, the communication device is enabled to perform the method for performance determination according to any one of claims 1 to 13 or any one of claims 14 to 26.
